# EUROPÄISCHE PATENTSCHRIFT

(11) **EP 1 407 911 B1**
(45) Veröffentlichungstag und Bekanntmachung des Hinweises auf die Patenterteilung: **23.03.2011**
(21) Anmeldenummer: 03021414.2
(22) Anmeldetag: 23.09.2003
(51) Int. Cl.: B60J 7/00

(54) **Sonnenschutzanordnung für eine lichtdurchlässige Karosseriefläche**
Sunshade assembly for a transparent plane of the body work
Ensemble pare-soleil pour une pièce transparente de la carosserie

(30) Priorität: 26.09.2002 DE 10245246
(43) Veröffentlichungstag der Anmeldung: 14.04.2004
(73) Patentinhaber: GM Global Technology Operations, Inc., Detroit, MI 48265-3000 (US)
(72) Erfinder: Hallik, Matthias, 65207 Wiesbaden (DE); Leopold, Frank, 65232 Taunusstein (DE); Luketic, Milan, 65428 Rüsselheim (DE)
(74) Vertreter: Strauss, Peter

(56) Entgegenhaltungen:
- DE-A- 10 058 261
- DE-A1- 19 910 949
- DE-U- 9 412 811
- DE-U- 9 412 816
- US-A- 6 056 352
- US-A- 6 065 793

## Beschreibung

Die Erfindung betrifft ein Fahrzeug mit einer Sonnenschutzanordnung für eine lichtdurchlässige Karosseriefläche.

Im Dachbereich von Fahrzeugen werden je nach Kundenwunsch häufig großflächige, lichtdurchlässige Fahrzeugkarosserieflächen in Form von Fahrzeugverglasungen eingesetzt. Beispielsweise ist aus der DE 199 621 15 A1 eine großflächige, lichtdurchlässige Fahrzeugkarosseriefläche für den Dachbereich eines Fahrzeugs bekannt. Zum Schutz vor Sonneneinstrahlung ist die lichtdurchlässige Fahrzeugkarosseriefläche mit einem Abschattungssystem, z. B. einem Rollo oder Schiebehimmel versehen. Dabei überdeckt das Abschattungssystem im Wesentlichen in seiner Betriebsposition die gesamte lichtdurchlässige Karosseriefläche. Um wunschgemäß zwischen der Betriebsposition - einer dem Sonnenschutz dienenden Position - bzw. der Ruheposition - einer einen freien Dachhimmel bewirkenden Position -, zu wählen, ist das Sonnenschutzsystem zwischen der Ruheposition und der Betriebsposition frei bewegbar.

Die US 6,065,793 A offenbart ein Fahrzeug mit einem Dachfenster und einer Frontscheibe, wobei eine Sonnenschutzeinheit vorgesehen ist, die in mehrere Segmente unterteilt ist. Die Segmente können von einer Ruheposition, in der die Segmente zwischen einem Dachhimmel und dem Fahrzeugdach angeordnet sind, unabhängig voneinander in eine Betriebsposition bewegt werden, in der eines oder mehrere Segmente einen Sonnenschutz für das Dachfenster bewirkt. Die bekannte Sonnenschutzeinheit ist insofern von Vorteil, als dass ein individuell einstellbarer Sonnenschutz für das Fahrzeug erzielt wird. Es besteht jedoch der Nachteil, dass ein verbesserter Sonnenschutz lediglich unter erhöhtem Aufwand erzielt werden kann.

Der Erfindung liegt daher die Aufgabe zugrunde, ein Fahrzeug zu schaffen, dessen Sonnenschutz einerseits individuell einstellbar und andererseits bei geringem Aufwand verbessert ist.

Diese Aufgabe wird durch die im Patentanspruch 1 angegebenen Merkmale gelöst, wobei die Erfindung von der Überlegung ausgeht, dass anstelle einer lediglich in Längsrichtung verstellbaren Sonnenschutzeinheit eine individuell, den jeweiligen Lichtverhältnissen bzw. den jeweiligen Wünschen der Insassen entsprechende Einstellung ermöglicht sein sollte. Darüber hinaus sollte die Sonnenschutzeinheit besonders einfach handhabbar und in verschiedene Positionen bewegbar sein. Hierzu weist die Sonnenschutzeinheit mehrere Segmente auf, die separat ausgeführt und somit einzeln bewegbar sind. Vorteilhafte Ausführungsformen der Erfindung sind Gegenstand der Unteransprüche.

Zweckmäßigerweise ist zumindest ein Segment in Längsrichtung gesehen seitlich in Führungsmitteln geführt. Beispielsweise ist mindestens ein Segment seitlich entlang des Daches in Führungsmitteln, welche am Fahrzeugrahmen angeordnet sind, geführt.

In einer bevorzugten, einfachen Ausführungsform des erfindungsgemäßen Fahrzeugs sind die Segmente der Sonnenschutzeinheit fest miteinander verbunden. Dabei bewirken die verschiedenen Segmente der Sonnenschutzeinheit unterschiedliche Sonnenschutzfunktionen. Beispielsweise dienen die vorderen Segmente der Sonnenschutzeinheit dem sogenannten Sonnenblendschutz im Bereich einer Front- oder Heckscheibe und die hinteren Segmente der Sonnenschutzeinheit dem Sonnenschutz im Dachbereich bzw. im Bereich des Dachfensters.

Für eine möglichst individuelle Einstellung der Sonnenschutzeinheit sind die Segmente zweckmäßigerweise zueinander und/oder miteinander bewegbar gehalten. Beispielsweise sind die beiden vorderen, als Sonnenblenden dienenden Segmente getrennt voneinander in verschiedene Positionen, insbesondere in verschiedene Betriebspositionen bewegbar, wobei die beiden Segmente mit dem den Sonnenschutz des Dachbereichs bewirkenden Segment zusammen in einer Ruheposition bewegbar sind. Hierzu sind die Segmente vorzugsweise in mehreren Ebenen übereinander angeordnet.

Für eine hinreichend gute Abschattung des zumeist großflächigen lichtdurchlässigen Dachfensterbereichs, welcher bei ungehinderter Sonneneinstrahlung zu einer besonders starken Erwärmung von Lenkrad und Sitzen und somit zu einer Innenraumaufheizung führt, entspricht ein erstes Segment in seinen Abmessungen zumindest den Abmessungen des Dachfensters oder lichtdurchlässigen Dachsegments. Bevorzugt erstreckt sich dabei das erste Segment in der Betriebsposition in etwa über die gesamte Fahrzeugbreite und in Längsrichtung über zumindest ein Drittel des Fahrzeugdaches. Alternativ oder zusätzlich entspricht mindestens ein zweites Segment in seinen Abmessungen zumindest teilweise den Abmessungen der Front- oder Heckscheibe.

Erfindungsgemäß sind die Segmente in der Ruheposition in einen zwischen einer Fahrzeugaußenhaut und Fahrzeuginnenhaut gebildeten Freiraum angeordnet. Bei in einer Ebene angeordneten Segmenten der Sonnenschutzeinheit ist diese als ganzes in den Freiraum zwischen dem Fahrzeugdach und dem Dachhimmel einführbar und dort gehalten. Bei voneinander getrennt angeordneten und zueinander frei bewegbaren Segmenten sind diese bevorzugt in mehreren Ebenen übereinander in den Freiraum einzeln oder miteinander einführbar und dort gehalten.

In einer bevorzugten Ausführungsform des erfindungsgemäßen Fahrzeugs ist die Sonnenschutzeinheit dreiteilig ausgebildet, wobei diese aus einem ersten großflächigen Segment und zwei in etwa gleich großen zweiten Segmenten gebildet ist. Dabei ist das erste großflächige Segment im Dachbereich des Fahrzeugs zum Sonnenschutz vorgesehen, während die zwei in etwa gleich großen zweiten Segmente im Frontscheiben- oder Heckscheibenbereich als sogenannte Sonnenschutzblenden vorgesehen sind.

Für eine besonders einfache Handhabung der Sonnenschutzeinheit sind diese Segmente zweckmäßigerweise plattenförmig ausgebildet. Hierdurch ist die Sonnenschutzeinheit weitgehend selbsttragend geführt und gehalten. Dabei werden die Platten in den Führungsmitteln, insbesondere Führungsschienen, entlang des Fahrzeugrahmens abgestützt und geführt. Die Segmente sind dabei für eine gleitende und gute mechanische Führung sowie hinreichende Abstützung entsprechend der Dachkrümmung und/oder Scheibenkrümmung im Wesentlichen gleichartig gekrümmt.

Alternativ zur selbsttragenden Anordnung der Sonnenschutzeinheit kann die Sonnenschutzeinheit im gespannten Zustand geführt und gehalten werden. Beispielsweise bei einer als Rollo ausgebildeten Sonnenschutzeinheit wird diese zwischen den seitlich angeordneten Führungsmitteln gespannt und über ein Gestänge, welches in den seitlichen Führungsmitteln gehalten ist, zwischen der Ruheposition und der Betriebsposition bewegt.

Zusätzlich zu der mittels der Führungsmittel bewirkten Fixierung der Sonnenschutzeinheit kann diese an den vorderen und/oder hinteren Enden, insbesondere den Seitenecken, gehalten sein. Beispielsweise ist ein Gestänge eines Rollos in Ausnehmungen am Fahrzeugrahmen eingehängt und somit fixiert.

Die mit dem erfindungsgemäßen Fahrzeug erzielten Vorteile bestehen unter anderem darin, dass eine segmentierte Sonnenschutzeinheit in beliebige Stellungen manuell positionierbar ist. Darüber hinaus ist eine derartig segmentierte Sonnenschutzeinheit aufgrund der einfach mechanisch zueinander und/oder miteinander bewegbaren Segmente besonders einfach handhabbar und auch im Wege einer Nachrüstung besonders einfach montierbar. Darüber hinaus wird ein flexibler und verbesserter Sonnenschutz ohne größeren Aufwand erzielt.

Ausführungsbeispiele des erfindungsgemäßen Fahrzeugs werden anhand einer Zeichnung näher erläutert. Darin zeigen:
- Figur 1: schematisch eine Sonnenschutzanordnung einer für eine lichtdurchlässige Karosseriefläche mit mehrere Segmente aufweisenden Sonnenschutzein- heit in Seitenansicht,
- Figur 2: schematisch die Sonnenschutzeinheit nach Fi- gur 1 in Draufsicht,
- Figur 3: schematisch eine Sonnenschutzeinheit mit fest miteinander verbundenen Segmenten in Drauf- sicht,
- Figur 4: schematisch eine Sonnenschutzeinheit mit zuei- nander und/oder miteinander bewegbaren Segmen- ten in Draufsicht,
- Figur 5: schematisch zwei zumindest gleich große, vonei- nander beabstandete Segmente einer Sonnen- schutzeinheit,
- Figur 6A: schematisch einen Querschnitt durch die beiden Segmente nach Figur 5,
- Figur 6B: und
- Figur 6C: schematisch einen Querschnitt durch eine Son- nenschutzeinheit mit in einer Ebene angeordne- ten Segmenten bzw. mit in mehreren Ebenen über- einander angeordneten Segmenten.

Einander entsprechende Teile sind in allen Figuren mit den gleichen Bezugszeichen versehen.

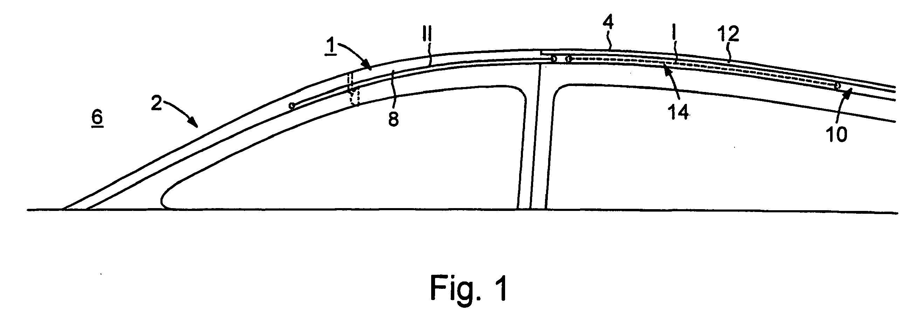

Figur 1 zeigt eine Sonnenschutzanordnung 1 für eine lichtdurchlässige Karosseriefläche 2, nämlich für ein Dach 4 einer Ausführungsform des erfindungsgemäßen Fahrzeugs 6. Die Sonnenschutzanordnung 1 umfasst dabei eine zwischen einer Ruheposition I und einer Betriebsposition II bewegbare Sonnenschutzeinheit 8. In der Ruheposition I ist die Sonnenschutzeinheit 8 in einen Freiraum 10 zwischen einer Fahrzeugaußenhaut 12, insbesondere dem Dach 4 und einer Fahrzeuginnenhaut 14, z. B. einem Dachhimmel einführbar und dort gehalten.

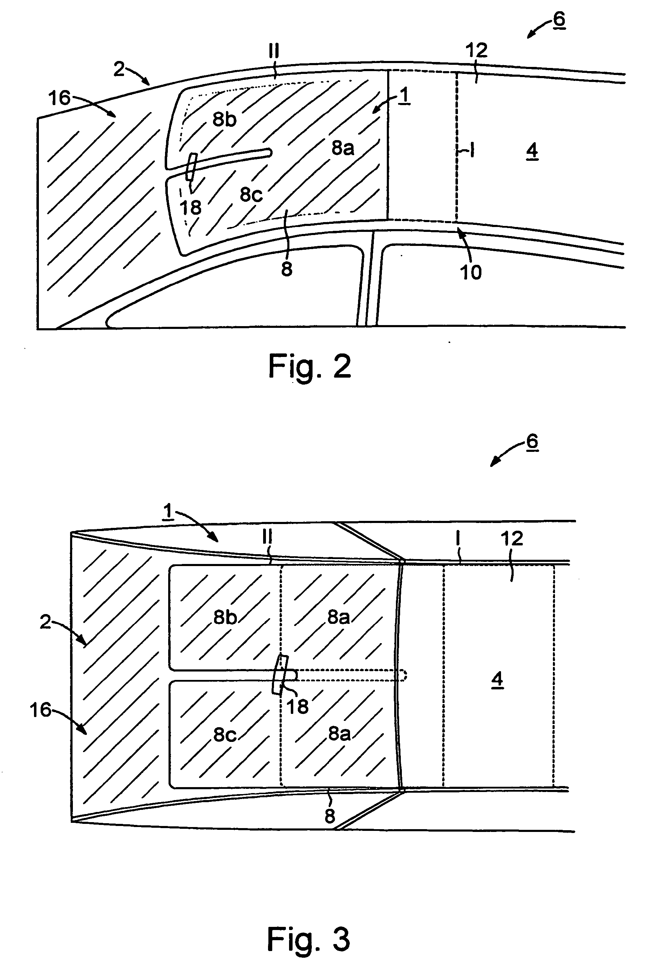

Figur 2 zeigt die Sonnenschutzeinheit 8 in Draufsicht. Die lichtdurchlässige Karosseriefläche 2 ist beispielsweise als eine sich bis in den Dachbereich 4 hinein erstreckende Frontscheibe 16 ausgebildet. Die Sonnenschutzeinheit 8 ist zur individuellen Einstellung zum Schutz vor Sonneneinstrahlung in mehrere Segmente 8a bis 8c unterteilt. Im Ausführungsbeispiel nach Figur 2 sind die Segmente 8a bis 8c der Sonnenschutzeinheit 8 fest miteinander verbunden. Das heißt, die Sonnenschutzeinheit 8 ist beispielsweise plattenförmig ausgebildet, wobei die einzelnen Segmente 8a bis 8c entsprechend ihrer individuell einstellbaren Position geformt sind. Beispielsweise erstreckt sich ein erstes Segment 8a in Querrichtung des Fahrzeugs 6 gesehen im Wesentlichen über die gesamte Fahrzeugbreite B und in Längsrichtung des Fahrzeugs 6 gesehen über zumindest ein Drittel des Daches 4. Mit anderen Worten: Das erste Segment 8a entspricht in seinen Abmessungen zumindest den Abmessungen des Teilbereiches der lichtdurchlässigen Karosseriefläche 2, welche sich im Dach 4 erstreckt.

Des Weiteren umfasst die Sonnenschutzeinheit 8 zwei weitere Segmente 8b und 8c, welche im Wesentlichen gleich groß ausgebildet sind. Die beiden zweiten Segmente 8b und 8c weisen dabei derartige Abmessungen auf, dass diese in der Betriebsposition II der Sonnenschutzeinheit 8 zumindest teilweise den Abmessungen der den Frontscheibenbereich 16 bildenden Karosseriefläche 2 entspricht. Bei einer derartigen, ebenen Anordnung der drei Segmente 8a bis 8c der Sonnenschutzeinheit 8 sind somit in Längsrichtung gesehen die zwei in etwa gleich großen vorderen Segmente 8b und 8c nebeneinander und voneinander beabstandet angeordnet. Der Abstand zwischen den beiden Segmenten 8b und 8c ist dabei derart gestaltet, dass ein an der Frontscheibe 16 angeordneter Rückspiegel 18 in dem schlitz- oder nutenförmigen Abstand beim Ausfahren der Sonnenschutzeinheit 8 in die Betriebsposition II geführt werden kann.

Figur 3 zeigt die dreiteilige Sonnenschutzeinheit 8 nach Figur 2 im ausgefahrenen Zustand, d. h. in der Betriebsposition II. Dabei erstrecken sich die beiden vorderen Segmente 8b und 8c bis weit in den Frontscheibenbereich 16 hinein. Somit dienen die beiden Segmente 8b und 8c als sogenannte Sonnenblenden und können individuell vom Fahrzeugführer oder einem Insassen eingestellt werden.

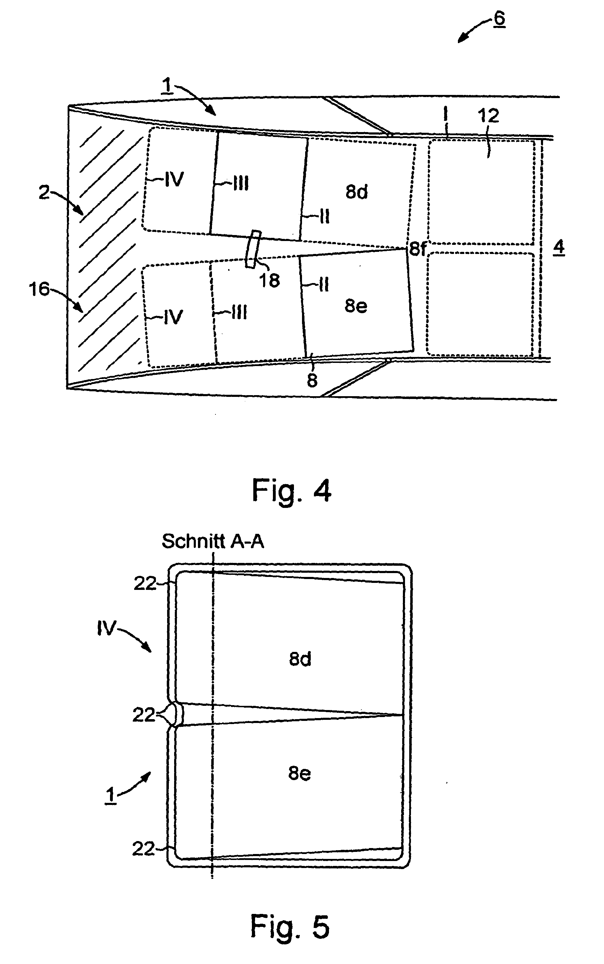

Figur 4 zeigt eine alternative Ausführungsform der Sonnenschutzeinheit 8. Die Sonnenschutzeinheit 8 umfasst hierbei mehrere Segmente 8d bis 8f. Die Segmente 8d bis 8f sind zueinander und/oder miteinander bewegbar gehalten. Das heißt, ein erstes Segment 8d ist separat von den anderen Segmenten 8e bis 8f zwischen den Positionen II bis IV (= Betriebspositionen) bewegbar gehalten. Je nach Art und Ausgestaltung kann das Segment 8d fächerartig ausgebildet sind, wobei die einzelnen Glieder des Segmentes 8d stufenweise ausfahrbar sind. Das weitere, in einer Ebene mit dem Segment 8d liegende Segment 8e, welches bevorzugt gleich groß ausgebildet ist, ist ebenfalls zwischen den Positionen II bis IV bewegbar angeordnet. Die beiden Segmente 8d und 8e dienen als sogenannte Sonnenblenden und können individuell jedes getrennt für sich bewegt und in eine entsprechende, dem Sonnenschutz dienende Position II, III oder IV geführt werden. Ein großflächiges, weiteres Segment 8f, welches sich im Wesentlichen im Bereich des Daches 4 der lichtdurchlässigen Karosseriefläche 2 erstreckt, ist separat und in einer weiteren Ebene im Bereich des Daches 4 bewegbar angeordnet. Zur Ablage der Segmente 8d bis 8f in der Ruheposition I werden die Segmente 8d bis 8f in mehreren Ebenen übereinander geschoben und in den Freiraum 10 zwischen der Fahrzeugaußenhaut 12, z. B. dem Dach 4 und der Fahrzeuginnenhaut 14, z. B. dem Dachhimmel eingeführt.

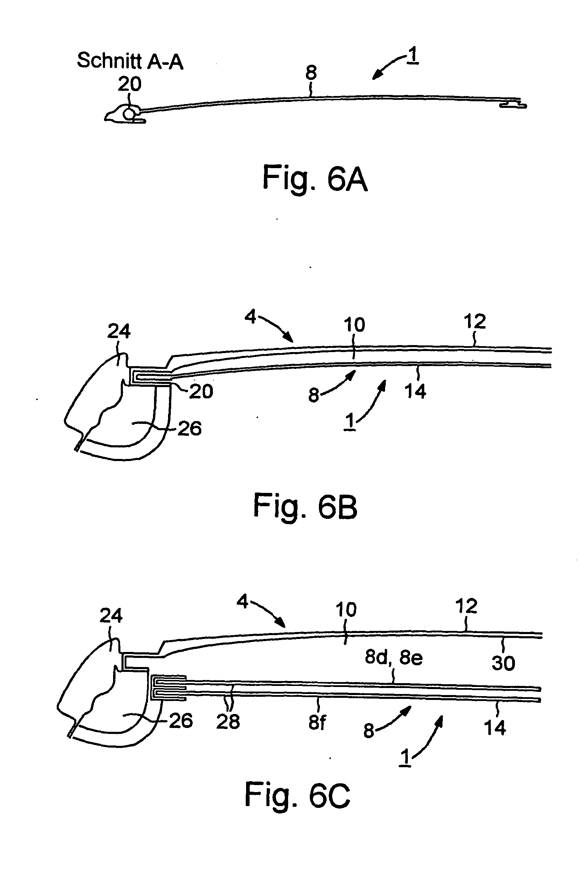

Figur 5 zeigt die Sonnenschutzeinheit 8 mit separaten Segmenten 8d und 8e in Draufsicht. Dabei sind die Segmente 8d und 8e als sogenannte Sonnenrollos ausgebildet. Zum bestimmungsgemäßen Ausfahren der Segmente 8d und 8e werden diese bevorzugt im gespannten Zustand geführt und wie in Figur 6A gezeigt, in einem Führungsmittel 20, z. B. einem umspritzten Kunststoffrahmen in einer dort angeordneten Metalleinlage geführt. Zusätzlich kann die Sonnenschutzeinheit 8 in den Betriebsposition II bis IV in Längsrichtung gesehen in den vorderen und/oder hinteren Enden 22, insbesondere den Seitenecken gehalten sein.

In Figur 6B ist eine plattenförmige Sonnenschutzeinheit 8 mit in einer Ebene angeordneten Elementen 8a bis 8c in einer in den Freiraum 10 geführten Ruheposition I dargestellt. Die Figur 6B zeigt dabei das Fahrzeug 6 im Querschnitt. Zur Führung der Sonnenschutzeinheit 8 ist diese in Längsrichtung gesehen seitlich in am Fahrzeugrahmen 24 angeordneten Führungsmitteln 20 geführt. Die Führungsmittel 20 sind dabei bevorzugt oberhalb eines Kopfairbags 26 am Fahrzeugrahmen 24 angeordnet. Die Figur 6C zeigt eine dreiteilige Sonnenschutzeinheit 8, wobei die einzelnen Segmente 8d bis 8f in Ebenen 28 übereinander in die Ruheposition I geführt werden. Die in den Freiraum 10 eingeführten Segmente 8d bis 8f der Sonnenschutzeinheit 8 bilden dabei selbst die Fahrzeuginnenhaut 14. Je nach Art und Ausführung des Fahrzeugs 6 kann die Sonnenschutzeinheit 8 unterhalb eines Dachspriegels 30 des Daches 4 eingeführt werden. Die in den Figuren 6B und 6C dargestellten Segmente 8d bis 8f der Sonnenschutzeinheit 8 sind mittels der Führungsmittel 20 selbsttragend in dem Freiraum 10 in die Ruheposition I geführt und dort gehalten. Zum bestimmungsgemäßen Gebrauch der Sonnenschutzanordnung 1 werden die Segmente 8d bis 8f selbsttragend in den Führungsmitteln 20 in einer der Betriebspositionen II bis IV geführt und dort gehalten.

### Bezugszeichenliste

- 1: Sonnenschutzanordnung
- 2: lichtdurchlässige Karosseriefläche
- 4: Dach
- 6: Fahrzeug
- 8: Sonnenschutzeinheit
- 8a - 8f: Segmente
- 10: Freiraum
- 12: Fahrzeugaußenhaut
- 14: Fahrzeuginnenhaut
- 16: Frontscheibe
- 18: Rückspiegel
- 20: Führungsmittel
- 22: Enden
- 24: Fahrzeugrahmen
- 26: Kopfairbag
- 28: Ebene
- 30: Dachspriegel

- B: Fahrzeugbreite
- I: Ruheposition
- II-IV: Betriebs- bzw. Arbeitspositionen

## Patentansprüche

1. Fahrzeug (6) mit einer lichtdurchlässigen Karosseriefläche (2), die ein Dachfenster im Dach (4) des Fahrzeugs (6) und eine Front- oder Heckscheibe aufweist, und einer Sonnenschutzanordnung (1) mit einer dreiteiligen Sonnenschutzeinheit (8), die in mehrere Segmente (8a, 8b, 8c; 8d, 8e, 8f) unterteilt und zwischen einer Ruheposition (I), in der die Segmente (8a, 8b, 8c; 8d, 8e, 8f) der Sonnenschutzeinheit (8) in einem Freiraum (10) zwischen einer Fahrzeugaußenhaut (12) und einer Fahrzeuginnenhaut (14) angeordnet sind, und einer Betriebsposition (II, III, IV) bewegbar ist, in der ein erstes Segment (8a; 8f) der Sonnenschutzeinheit (8) einen Sonnenschutz für das Dachfenster bewirkt, **dadurch gekennzeichnet, dass** zumindest eines von zwei zweiten Segmenten (8b, 8c; 8d, 8e) der Sonnenschutzeinheit (8) in zumindest einer Betriebsposition (II, III, IV) als Sonnenschutzblende für die Front- oder Heckscheibe dient.

2. Fahrzeug (6) nach Anspruch 1, **dadurch gekennzeichnet, dass** zumindest ein Segment (8a bis 8f) in Längsrichtung gesehen seitlich in Führungsmitteln (20) geführt ist.

3. Fahrzeug (6) nach Anspruch 1 oder 2, **dadurch gekennzeichnet, dass** die Segmente (8a bis 8f) fest miteinander verbunden sind.

4. Fahrzeug (6) nach Anspruch 1 oder 2, **dadurch gekennzeichnet, dass** die Segmente (8a bis 8f) zueinander und/oder miteinander bewegbar gehalten sind.

5. Fahrzeug (6) nach Anspruch 4, **dadurch gekennzeichnet, dass** die Segmente (8a bis 8f) in mehreren Ebenen (28) übereinander angeordnet sind.

6. Fahrzeug (6) nach einem der Ansprüche 1 bis 5, **dadurch gekennzeichnet, dass** das erste Segment (8a) in seinen Abmessungen zumindest den Abmessungen des Dachfensters entspricht.

7. Fahrzeug (6) nach Anspruch 6, **dadurch gekennzeichnet, dass** sich das erste Segment (8a) in der Betriebsposition (II bis IV) in etwa über die gesamte Fahrzeugbreite und in Längsrichtung über zumindest ein Drittel des Daches (4) erstreckt.

8. Fahrzeug (6) nach einem der Ansprüche 1 bis 7, **dadurch gekennzeichnet, dass** zumindest eines der zweiten Segmente (8b) in seinen Abmessungen zumindest teilweise den Abmessungen der Front- oder Heckscheibe entspricht.

9. Fahrzeug (6) nach einem der vorangehenden Ansprüche, **dadurch gekennzeichnet, dass** die Sonnenschutzeinheit (8) dreiteilig aus dem ersten Segment (8a) und zwei in etwa gleich großen zweiten Segmenten (8b, 8c) gebildet ist.

10. Fahrzeug (6) nach Anspruch 9, **dadurch gekennzeichnet, dass** das erste Segment (8a) und die zweiten Segmente (8b, 8c) der dreiteiligen Sonnenschutzeinheit in einer Ebene angeordnet sind, wobei die zweiten Segmente (8b, 8c) in Längsrichtung gesehen nebeneinander und voneinander beabstandet angeordnet und mit dem ersten Segment (8a) fest verbunden sind.

11. Fahrzeug (6) nach Anspruch 9, **dadurch gekennzeichnet, dass** bei einer in mehreren Ebenen (28) übereinander ausgebildeten, dreiteiligen Sonnenschutzeinheit (8) die zweiten Segmente (8d, 8e) in einer Ebene nebeneinander und voneinander beabstandet angeordnet sind und das erste Segment (8f) zumindest teilweise in einer weiteren Ebene (28) überlappen.

12. Fahrzeug (6) nach einem der vorangehenden Ansprüche, **dadurch gekennzeichnet, dass** die Sonnenschutzeinheit (8) plattenförmig ausgebildet ist.

13. Fahrzeug (6) nach einem der vorangehenden Ansprüche, **dadurch gekennzeichnet, dass** die Sonnenschutzeinheit (8) selbsttragend geführt und gehalten ist.

14. Fahrzeug (6) nach einem der Ansprüche 1 bis 11, **dadurch gekennzeichnet, dass** die Sonnenschutzeinheit (8) im gespannten Zustand geführt und gehalten ist.

15. Fahrzeug (6) nach Anspruch 14, **dadurch gekennzeichnet, dass** die Sonnenschutzeinheit (8) in der Betriebsposition (II bis IV) in Längsrichtung gesehen an den vorderen und/oder hinteren Enden (22), insbesondere den Seitenecken, zusätzlich gehalten ist.

## Claims

1. A vehicle (6), comprising a transparent plane (2) of the bodywork which comprises a window in the roof (4) of the vehicle (6) and a windshield and a rear window, and a sunshade arrangement (1) with a three-part sunshade unit (8) which is subdivided into several segments (8a, 8b, 8c; 8d, 8e, 8f) and is arranged between an idle position (I) in which the segments (8a, 8b, 8c; 8d, 8e, 8f) of the sunshade unit (8) are arranged in a free space (10) between an outside skin (12) of the vehicle and an inside skin (14) of the vehicle, and an operating position (II, III, IV) in which a first segment (8a; 8f) of the sunshade unit (8) produces a sunshade for the roof window, **characterized in that** at least one of two second segments (8b, 8c; 8d, 8e) of the sunshade unit (8) is used in at least one operating position (II, III, IV) as a sunshade blind for the windshield or rear window.

2. A vehicle (6) according to claim 1, **characterized in that** at least one segment (8a to 8f) is guided laterally in guide means (20) as seen in the longitudinal direction.

3. A vehicle (6) according to claim 1 or 2, **characterized in that** the segments (8a to 8f) are rigidly connected with one another.

4. A vehicle (6) according to claim 1 or 2, **characterized in that** the segments (8a to 8f) are held in a movable manner towards one another and/or with one another.

5. A vehicle (6) according to claim 4, **characterized in that** the segments (8a to 8f) are arranged above one another in several planes.

6. A vehicle (6) according to one of the claims 1 to 5, **characterized in that** the first segment (8a) corresponds in its dimensions at least to the dimensions of the roof window.

7. A vehicle (6) according to claim 6, **characterized in that** the first segment (8a) extends in the operating position (II to IV) approximately over the entire width of the vehicle, and over at least one-third of the roof (4) in the longitudinal direction.

8. A vehicle (6) according to one of the claims 1 to 7, **characterized in that** at least one of the second segments (8b) corresponds in its dimensions at least partly to the dimensions of the windshield or rear window.

9. A vehicle (6) according to one of the preceding claims, **characterized in that** the sunshade unit (8) is arranged in three parts of the first segment (8a) and two approximately equally large second segments (8b, 8c).

10. A vehicle (6) according to claim 9, **characterized in that** the first segment (8a) and the second segments (8b, 8c9) of the three-part sunshade unit are arranged in a plane, with the second segments (8b, 8c) being arranged next to one another and spaced from one another as seen in the longitudinal direction and being rigidly connected with the first segment (8a).

11. A vehicle (6) according to claim 9, **characterized in that** in the case of a three-part sunshade unit (1) which is arranged above one another in several planes (28) the second segments (8d, 8e) are arranged next to one another and spaced from one another in one plane, and overlap the first segment (8f) at least partly in a further plane (28).

12. A vehicle (6) according to one of the preceding claims, **characterized in that** the sunshade unit (8) is arranged in a plate-like way.

13. A vehicle (6) according to one of the preceding claims, **characterized in that** the sunshade unit (8) is guided and held in a self-supporting way.

14. A vehicle (6) according to one of the claims 1 to 11, **characterized in that** the sunshade unit (8) is guided and held in the tensioned state.

15. A vehicle (6) according to claim 14, **characterized in that** the sunshade unit (8) is additionally held at the front and/or rear ends (22), especially the lateral corners, in the operating position (II to IV) as seen in the longitudinal direction.

## Revendications

1. Véhicule (6) avec une surface de carrosserie laissant passer la lumière (2), qui présente une fenêtre de toit dans le toit (4) du véhicule (6) ou un pare-brise ou une vitre arrière, et avec un dispositif pare-soleil (1) avec une unité de pare-soleil (8) en trois parties, qui est divisée en plusieurs segments (8a, 8b, 8c ; 8d, 8e, 8f) et qui peut être déplacée entre une position de repos (I), dans laquelle les segments (8a, 8b, 8c ; 8d, 8e, 8f) de l'unité de pare-soleil (8) sont disposés dans un espace libre (10) entre une enveloppe extérieure du véhicule (12) et une enveloppe intérieure du véhicule (14), et une position de fonctionnement (II, III, IV) dans laquelle un premier segment (8a ; 8f) de l'unité de pare-soleil (8) assure une protection solaire pour la fenêtre de toit, **caractérisé en ce qu'**au moins un de deux deuxièmes segments (8b, 8c ; 8d, 8e) de l'unité de pare-soleil (8) sert de volet pare-soleil pour le pare-brise ou la vitre arrière dans au moins une position de fonctionnement (II, III, IV).

2. Véhicule (6) selon la revendication 1, **caractérisé en ce qu'**au moins un segment (8a à 8f) est guidé latéralement, vu dans le sens de la longueur, dans des moyens de guidage (20).

3. Véhicule (6) selon la revendication 1 ou 2, **caractérisé en ce que** les segments (8a à 8f) sont reliés entre eux de manière fixe.

4. Véhicule (6) selon la revendication 1 ou 2, **caractérisé en ce que** les segments (8a à 8f) sont retenus de manière mobile les uns par rapport aux autres et/ou les uns avec les autres.

5. Véhicule (6) selon la revendication 4, **caractérisé en ce que** les segments (8a à 8f) sont disposés les uns pardessus les autres dans plusieurs plans (28).

6. Véhicule (6) selon l'une des revendications 1 à 5, **caractérisé en ce que** le premier segment (8a) a des dimensions correspondant au moins aux dimensions de la fenêtre de toit.

7. Véhicule (6) selon la revendication 6, **caractérisé en ce que** le premier segment (8a) s'étend, dans la position de fonctionnement (II à IV), approximativement sur toute la largeur du véhicule et, dans le sens de la longueur, sur au moins un tiers du toit (4).

8. Véhicule (6) selon l'une des revendications 1 à 7, **caractérisé en ce qu'**au moins un des deuxièmes segments (8b) a des dimensions correspondant au moins partiellement aux dimensions du pare-brise ou de la vitre arrière.

9. Véhicule (6) selon l'une des revendications précédentes, **caractérisé en ce que** l'unité de pare-soleil (8) est formée en trois parties par le premier segment (8a) et deux deuxièmes segments (8b, 8c) de taille approximativement égale.

10. Véhicule (6) selon la revendication 9, **caractérisé en ce que** le premier segment (8a) et les deuxièmes segments (8b, 8c) de l'unité de pare-soleil en trois parties sont disposés dans le même plan, les deuxièmes segments (8b, 8c) étant disposés l'un à côté de l'autre dans le sens de la longueur et écartés l'un de l'autre et sont reliés de façon fixe au premier segment (8a).

11. Véhicule (6) selon la revendication 9, **caractérisé en ce que** dans une unité de pare-soleil (8) en trois parties superposées dans plusieurs plans (28), les deuxièmes segments (8d, 8e) sont disposés dans un même plan l'un à côté de l'autre et à distance l'un de l'autre et chevauchent le premier segment (8f) au moins partiellement dans un autre plan (28).

12. Véhicule (6) selon l'une des revendications précédentes, **caractérisé en ce que** l'unité de pare-soleil (8) est en forme de plaque.

13. Véhicule (6) selon l'une des revendications précédentes, **caractérisé en ce que** l'unité de pare-soleil (8) est guidée et retenue de façon autoportante.

14. Véhicule (6) selon l'une des revendications 1 à 11, **caractérisé en ce que** l'unité de pare-soleil (8) est guidée et retenue dans l'état tendu.

15. Véhicule (6) selon la revendication 14, **caractérisé en ce que** l'unité de pare-soleil (8) est en outre retenue dans la position de fonctionnement (II à IV), aux extrémités avant et/ou arrière (22) dans le sens de la longueur, en particulier dans les coins latéraux.
